# EUROPÄISCHE PATENTSCHRIFT

(11) **EP 1 220 067 B1**
(45) Veröffentlichungstag und Bekanntmachung des Hinweises auf die Patenterteilung: **28.09.2005**
(21) Anmeldenummer: 01129879.1
(22) Anmeldetag: 14.12.2001
(51) Int. Cl.: G05B 19/042, G05B 19/18

(54) **Integrationsverfahren für Automatisierungskomponenten**
Method for integrating automation components
Procédé d'intégration pour composants d'automatisation

(30) Priorität: 27.12.2000 DE 10065418
(43) Veröffentlichungstag der Anmeldung: 03.07.2002
(73) Patentinhaber: SIEMENS AKTIENGESELLSCHAFT, 80333 München (DE)
(72) Erfinder: Amrhein, Armin, 92245 Kümmersbruck (DE); Birzer, Johannes, 92551 Stulln (DE); Kiesel, Martin, 91099 Poxdorf (DE); Schmitt, Regina, 91056 Erlangen (DE)

(56) Entgegenhaltungen:
- EP-A- 1 195 667
- DE-A- 19 740 550
- US-A- 5 877 959
- BAERNREUTHER B: "MAP-ANWENDUNGSDIENSTE UEBER EINEM KOMMUNIKATIONSSYSTEM FUER HETEROGENE FELDBUS-VERBUNDE" AUTOMATISIERUNGSTECHNISCHE PRAXIS - ATP, OLDENBOURG VERLAG. MUNCHEN, DE, Bd. 33, Nr. 7, 1. Juli 1991 (1991-07-01), Seiten 358-363, XP000243094 ISSN: 0178-2320

## Beschreibung

Die Erfindung bezieht sich auf ein Verfahren zur Integration von mehreren Automatisierungskomponenten in ein einheitliches Ablaufebenenmodell eines jeweiligen Runtime-Systems einer industriellen Steuerung.

Es ist heutzutage üblich, sowohl für die speicherprogrammierbare Steuerung (SPS) als auch für die Bewegungssteuerung (MC) jeweils unterschiedliche hierarchische Ablaufebenen zu modellieren, denen Software-Tasks zur Steuerung des jeweiligen technischen Prozesses zugeordnet werden. Diese Tasks können Systemaufgaben erfüllen, sie können aber auch anwenderprogrammiert sein.

Aus DE 197 40 550 A1 ist es bekannt, dass Prozesssteuerungsfunktionalitäten der speicherprogrammierbaren Steuerungen "SPS" und Bewegungsfunktionalitäten von MC-Steuerungen in einem einheitlichen konfigurierbaren Steuerungssystem integriert werden können.

Diese SPS/MC-Integration geschieht in Form des Zusammenschaltens von SPS- und MC-Steuerungsbaugruppen. Bei einer solchen Ausführung der Integration wird aber keine optimale und effiziente Taskstruktur für die Gesamtheit der Steuerungsaufgaben erreicht. Außerdem werden bei dieser Art der Integration hauptsächlich die klassischen MC-Funktionalitäten, wie sie insbesondere für Werkzeugmaschinen relevant sind, unterstützt. Anforderungen an die Steuerung, wie sie aus dem Betrieb von Produktionsmaschinen bekannt sind, werden durch diese Art des Zusammenschaltens von SPS- und MC-Steuerungsbaugruppen nicht optimal unterstützt.

In der nicht vorveröffentlichten Anmeldung EP 1 195 667 wird eine universelle Bewegungssteuerung mit Engineering- und Run-Time-System vorgeschlagen, welche funktionell die klassischen Aufgaben einer speicherprogrammierbaren Steuerung und einer numerischen Steuerung in sich vereinigt, wobei ein einheitliches Ablaufebenenmodell gebildet ist.

In der Anmeldung DE 19 93 19 33.2 wird vorgeschlagen, den Takt des Kommunikationssystems zwischen dem PC-System und den peripheren Geräten für einen Wechsel zwischen einem Echtzeitbetriebsprogramm und einem Nicht-Echtzeitbetriebsprogramm heranzunehmen. Hier ist es aber die Aufgabe dieser Taktabgreifung aus dem Kommunikationssystem, in einem industriellen Prozess einen möglichst reibungslosen Wechsel zwischen Echtzeit- und Nicht-Echtzeitanwendungen stattfinden zu lassen.
Bei dieser Ausgestaltung wird der Grundtakt aber nur aus dem Takt des Kommunikationsmediums abgeleitet und er wird nur für den Wechsel des Betriebssystemmodus eines PC-Systems verwendet.

Der Erfindung liegt daher die Aufgabe zugrunde, für jeweils unterschiedliche Steuerungsaufgaben und unterschiedliche Randbedingungen bzw. Anforderungen des zugrunde liegenden technischen Prozesses in einfacher Weise optimale Ausprägungen einer industriellen Steuerung zu erstellen, die sowohl SPS- als auch MC-Funktionalität oder die Funktionalitäten weiterer Automatisierungskomponenten zur Verfügung stellt und somit auch für die Steuerung von Produktionsmaschinen geeignet ist.

Diese optimalen Ausprägungen werden prinzipiell durch ein einheitliches konfigurierbares Ablaufebenenmodell für die Steuerungs-Tasks der industriellen Steuerung erreicht.

Gemäß der Erfindung wird die oben genannte Aufgabe sowohl durch eine industrielle Steuerung mit den Merkmalen nach Anspruch 1 gelöst als auch durch ein Verfahren nach Anspruch 5.

Zur Integration von mehreren Automatisierungskomponenten in ein einheitliches Ablaufebenenmodell eines jeweiligen Runtime-Systems einer industriellen Steuerung erfolgt eine:
a) Analyse der Ablaufeigenschaften der Automatisierungskomponenten,
b) Ableiten einer Struktur für ein einheitliches Ablaufebenenmodell,bestehend aus einer Anordnung von System- und/oder Anwenderebenen, das die Anforderungen der beteiligten Automatisierungskomponenten abdeckt,
c) Zuordnung der System- und Anwendertasks in das Ablaufebenenmodell und
d) Programmieren der Anwenderebene bzw. der Anwenderebenen.

Ein Anwender kann dadurch auf eine definierte, systematische und flexible Art und Weise eine industrielle Steuerung mit integrativem Runtime-System erstellen, das Prozesssteuerungsfunktionalitäten von speicherprogrammierbaren Steuerungen "SPS", Bewegungsfunktionalitäten von "MC"-Steuerungen oder Funktionalitäten von weiteren Automatisierungskomponenten in sich vereint.

Durch die Schichtung in Systemebenen und Ablaufebenen wird der Kommunikationsaufwand zwischen den Tasks, die die Funktionalitäten der unterschiedlichen Automatisierungskomponenten repräsentieren, minimiert. Ein weiterer Vorteil liegt darin, dass die Programmierung der Steuerungsaufgaben für die unterschiedlichen Automatisierungskomponenten in einer einheitlichen Programmiersprache mit einer einheitlichen Erstelloberfläche erfolgen kann und dass der Anwender ein für seine jeweiligen Anforderungen zugeschnittenes Ablaufebenenmodell flexibel erstellen kann.

Ein weiterer Vorteil liegt darin, dass vom Anwender in die Anwenderebenen Anwenderprogramme ladbar sind. Dadurch kann der Anwender in seinen Anwenderprogrammen die Funktionalitäten der Automatisierungskomponenten sehr flexibel an die zugrundeliegenden Anforderungen des technischen Prozesses anpassen.

Die Erfindung liegt darin, dass der Grundtakt des Ablaufebenenmodells aus einem internen Timer (T2) oder aus einem internen Takt (T3) eines Kommunikationsmediums (B1, B2) oder aus einem externen Gerät (EG) oder von einer Größe (TG), die zum technologischen Prozess (P1, P2) gehört, abgeleitet wird. Dadurch kann sehr flexibel und sehr einfach der Grundtakt für das Ablaufebenenmodell abgeleitet werden. Dadurch, dass der Grundtakt für das Ablaufebenenmodell auch von einer Größe, die zum technologischen Prozess gehört, ableitbar ist, kann auf eine sehr einfache Weise eine direkte Rückkopplung aus dem technologischen Prozess zur Steuerung erhalten werden. Ein Anwender hat somit große Flexibilität, den Grundtakt zu erzeugen. Der Grundtakt kann z.B. aus äquidistanten Bussystemen wie z.B. Profibus sehr leicht abgeleitet werden.

Eine erste Ausgestaltung der vorliegenden Erfindung liegt darin, dass die System- und/oder Anwenderebenen priorisiert werden. Dadurch wird die Flexibilität des Anwenders bei der Erstellung eines integrativen Runtime-Systems einer industriellen Steuerung erhöht.

Eine weitere vorteilhafte Ausgestaltung der Erfindung liegt darin, dass in die Anwenderebenen Anwenderprogramme ladbar sind. Dadurch kann der Anwender in seinen Anwenderprogrammen die Funktionalität der Steuerung sehr flexibel an die zugrunde liegenden Anforderungen des technischen Prozesses anpassen und er kann auch die Anwenderprogramme in unterschiedliche Anwenderebenen laden, um dadurch eine für seine jeweiligen Applikationen effektive Ausprägung der Steuerung zu erreichen.

Eine weitere vorteilhafte Ausgestaltung der Erfindung liegt darin, dass aus den Anwenderprogrammen ein programmierter Zugang zur Gesamtfunktionalität der Steuerung möglich ist. Der Anwender kann somit aus den Anwenderprogrammen heraus durch eine einheitliche Schnittstelle die Steuerungsfunktionalität nutzen.

Ein Ausführungsbeispiel der Erfindung ist in der Zeichnung dargestellt und wird im folgenden erläutert.

Dabei zeigen:
- FIG 1: in einer abstrakten Schemadarstellung Automatisierungskomponenten zum Betreiben technischer Prozesse,
- FIG 2: die wesentlichen Ablaufebenen einer klassischen speicherprogrammierbaren Steuerung,
- FIG 3: die wesentlichen Ablaufebenen einer Bewegungssteuerung,
- FIG 4: eine Schemadarstellung einer industriellen Steuerung,
- FIG 5: das integrative Ablaufebenenmodell des Runtime-Systems der industriellen Steuerung,
- FIG 6: ein Ausführungsbeispiel für das Zuladen von Anwenderprogrammen in die Anwenderebenen und
- FIG 7: in einer Schemadarstellung Möglichkeiten, wie der Grundtakt für die industrielle Steuerung gewonnen wird.

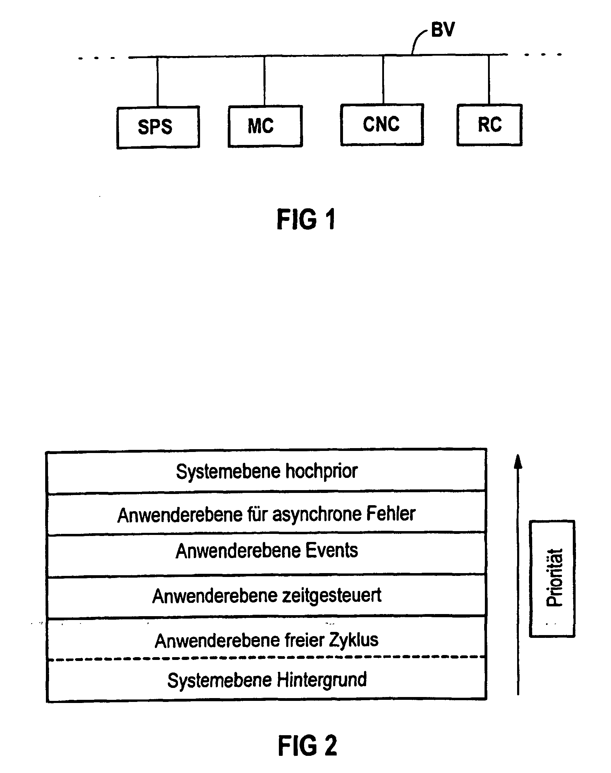

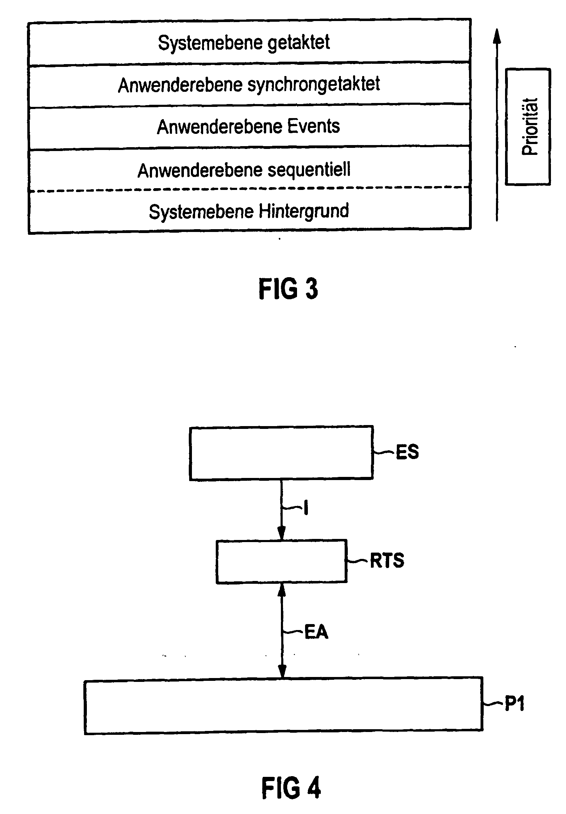

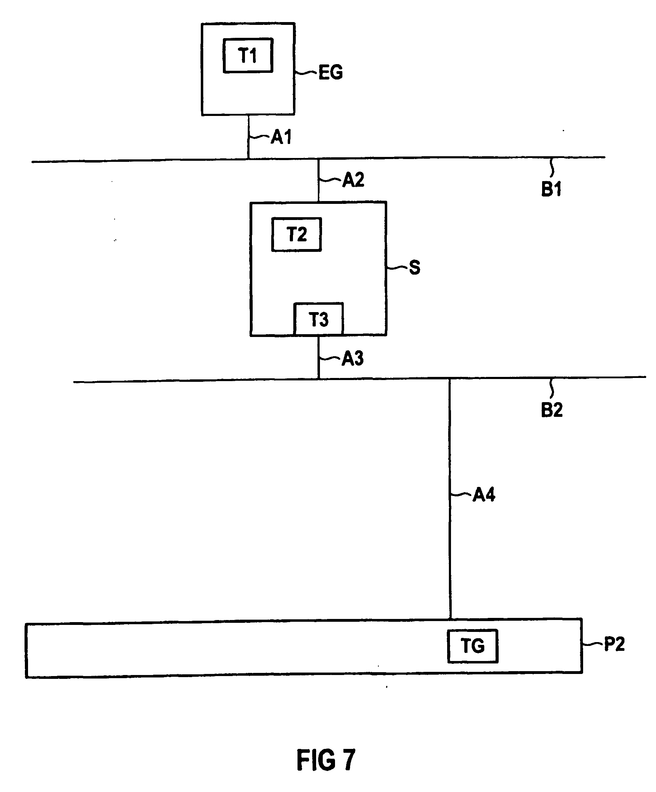

In der Darstellung gemäß FIG 1 sind Automatisierungskomponenten (SPS, MC, CNC, RC) zum Betrieb eines technischen Prozesses (P1, P2; FIG 4 bzw. FIG 7) dargestellt, die über eine Busverbindung BV miteinander verbunden sind. Durch jeweils 3 Punkte am linken und rechten Ende der Busverbindung BV ist angedeutet, dass weitere Automatisierungskomponenten an der Busverbindung BV hängen können. Darüber hinaus wird durch die Busverbindung BV auch der Anschluss an eine dazugehörige Steuerungseinheit (industrielle Steuerung) bzw. an Steuerungseinheiten hergestellt. Die Busverbindung BV ist nur exemplarisch gewählt, auch andere Kommunikationsmedien (z.B. Ringverbindungen oder wireless-Verbindungen sind denkbar). Die Automatisierungskomponenten (SPS, MC, CNC, RC) haben unterschiedliche Charakteristika und unterschiedliche Ablaufeigenschaften. Die Analyse dieser Eigenschaften durch den Anwender kann über heuristische, empirische oder weitere auch kombinierbare Analysemethoden erfolgen. Reaktionszeiten und Zykluszeiten sind z.B. Parameter, die in diese Analyse miteingehen.

In der Darstellung gemäß FIG 2 sind die wesentlichen Ablaufebenen einer klassischen speicherprogrammierbaren Steuerung (SPS), angeordnet nach ihrer Priorität, gezeigt. Der Prioritätsanstieg ist dabei durch einen Pfeil symbolisiert. In der niederpriorsten Ebene werden, wie durch eine gestrichelte Linie angedeutet, zwei unterschiedliche Aufgaben, nämlich ein freier Zyklus, d.h. "Anwenderebene freier Zyklus" und eine Hintergrund-Systemebene, d.h. "Systemebene Hintergrund" abgewickelt. Der Hintergrund-Systemebene sind z.B. Kommunikationsaufgaben zugeordnet. Bei einer folgenden Anwenderebene, bezeichnet als "Anwenderebene zeitgesteuert", ist der Aufruftakt der Tasks bzw. der Programme dieser Ebene parametrierbar. Es erfolgt eine Überwachung dahingehend, ob die Bearbeitung eines Anwenderprogrammes dieser getakteten Ebene rechtzeitig abgeschlossen ist, bevor das Startereignis erneut auftritt. Läuft die Taktzeit ab, ohne dass das Anwenderprogramm der zugeordneten Ebene fertig abgearbeitet ist, wird eine entsprechende Task einer prioritätsmäßig übernächsten "Anwenderebene für asynchrone Fehler" gestartet. In dieser "Anwenderebene für asynchrone Fehler" kann der Anwender die Behandlung von Fehlerzuständen ausprogrammieren.
Auf die "Anwenderebene zeitgesteuert" folgt eine "Anwenderebene Events". Die Reaktion auf externe oder interne Ereignisse (Events) erfolgt innerhalb der "Anwenderebene Events". Ein typisches Beispiel für ein solches Ereignis ist das Schalten eines binären bzw. digitalen Eingangs, wodurch typischerweise ein Ereignis ausgelöst wird. In einer "Systemebene hochprior" liegen die Aufgaben des Betriebssystems, welche die Arbeitsweise der programmierbaren Steuerung (SPS) sicherstellen.

Die Darstellung gemäß FIG 3 zeigt die wesentlichen Ablaufebenen einer Bewegungssteuerung (MC). Auch hierbei sind die einzelnen Ebenen nach ihrer Priorität hierarchisch, wie durch einen Pfeil symbolisiert, angeordnet. Eine "Systemebene Hintergrund" und eine "Anwenderebene sequentiell" haben eine gleiche Priorität, nämlich die niedrigste. Diese aufgabenmäßige Zugehörigkeit ist wie bei FIG 2 durch eine gestrichelte Linie symbolisiert. Die Tasks der "Anwenderebene sequentiell" werden zusammen mit den Tasks der "Systemebene Hintergrund" im Round-Robin-Verfahren abgearbeitet. Typische Tasks der "Systemebene Hintergrund" sind z.B. solche für Kommunikationsaufgaben. In der "Anwenderebene sequentiell" laufen die vom Anwender programmierten Programmteile für die eigentliche Steuerungsaufgabe. Stößt die Steuerung in einem dieser Programmteile auf einen Bewegungs- oder Positionierbefehl, wird ein "Suspend" gesetzt, d.h. das Anwenderprogramm wird an dieser Stelle unterbrochen. In diesem Fall wird ein Befehl synchron genutzt. Die Abarbeitung dieses Bewegungs- oder Positionierbefehls geschieht in einer höchstprioren "Systemebene getaktet". Ein jeder Lageregler oder Interpolator, der in der "Systemebene getaktet" abläuft, führt diesen Bewegungs- bzw. Positionierbefehl aus. Nach Ausführung des Befehls wird in die "Anwenderebene sequentiell" zurückgesprungen und das durch "Suspend" unterbrochene Anwenderprogramm wird durch ein "Resume" an der gleichen Stelle fortgesetzt. Die "Systemebene getaktet" enthält neben den schon erwähnten Lagereglern auch den Interpolationsteil der Steuerung.

Auf die niederpriorste Ebene setzt die "Anwenderebene Events" auf. Hier sind solche Tasks untergebracht, die auf externe oder interne Ereignisse reagieren. Solche Ereignisse können beispielsweise Alarme sein.

In einer folgenden "Anwenderebene synchrongetaktet" laufen synchron getaktete Anwender-Tasks ab, z.B. Reglerfunktionalitäten. Diese Tasks sind synchronisiert zu getakteten Systemfunktionen wie zum Beispiel Interpolator, Lageregler oder zyklische Buskommunikation.

In einer folgenden "Anwenderebene Events" sind solche Tasks untergebracht, die auf externe oder interne Ereignisse reagieren. Solche Ereignisse können beispielsweise Alarme sein.

In der Darstellung gemäß FIG 4 wird in Form einer Schemadarstellung gezeigt, dass die Steuerung eines technischen Prozesses P1 über das Runtime-System RTS einer industriellen Steuerung erfolgt. Die Verbindung zwischen dem Runtime-System RTS der Steuerung und dem technischen Prozess P1 geschieht bidirektional über die Ein-/Ausgäng EA. Die Programmierung der Steuerung und damit das Festlegen des Verhaltens des Runtime-Systems RTS geschieht im Engineering-System ES. Das Engineering-System ES enthält Werkzeuge für die Konfigurierung, Projektierung und Programmierung für Maschinen bzw. für die Steuerung technischer Prozesse. Die im Engineering-System erstellten Programme werden über den Informationspfad I in das Runtime-System RTS der Steuerung übertragen. Bezüglich seiner Hardware-Ausstattung besteht ein Engineering-System ES üblicherweise aus einem Computersystem mit Graphikbildschirm (z.B. Display), Eingabehilfsmitteln (z.B. Tastatur und Maus), Prozessor, Arbeits- und Sekundärspeicher, einer Einrichtung für die Aufnahme computerlesbarer Medien (z.B. Disketten, CDs) sowie Anschlusseinheiten für einen Datenaustausch mit anderen Systemen (z.B. weiteren Computersystemen, Steuerungen für technische Prozesse) oder Medien (z.B. Internet). Eine Steuerung besteht üblicherweise aus Eingabe- und Ausgabeeinheiten, sowie aus Prozessor und Programmspeicher. Es ist auch vorstellbar, dass die Steuerung eines technischen Prozesses P1 über mehrere Runtime-Systeme RTS von industriellen Steuerungen erfolgt.

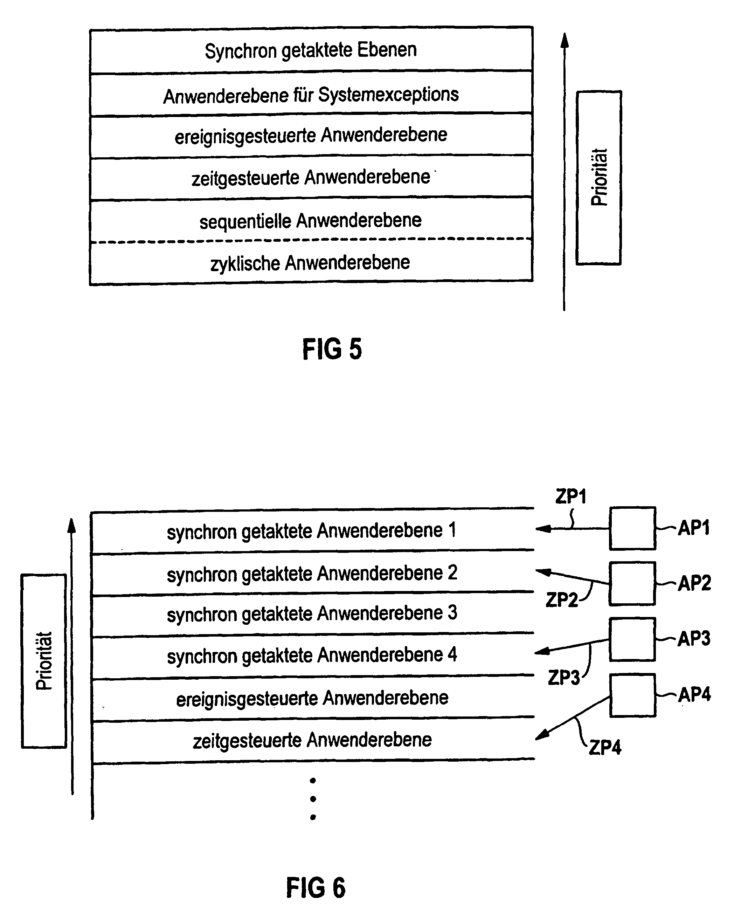

Die Darstellung gemäß FIG 5 zeigt das integrative Ablaufebenenmodell des Runtime-Systems (RTS; FIG 4) der industriellen Steuerung. Die Priorisierung der Ebenen wird durch einen Pfeil in Richtung zur höchsten Priorität angedeutet. Die niederpriorsten Ebenen sind die "zyklische Anwenderebene" und die "sequentielle Anwenderebene". Diese beiden Ebenen laufen mit der gleichen Priorität. Deshalb sind diese Ebenen in der Darstellung gemäß FIG 4 durch eine gestrichelte Linie getrennt. Die "zyklische Anwenderebene" beinhaltet die "Background Task", die zykluszeitüberwacht ist. In der "sequentiellen Anwenderebene" werden die "Motion Tasks" durchlaufen. "Motion Tasks" sind nicht zykluszeitüberwacht und dienen im Wesentlichen zur Beschreibung sequentieller Abläufe. "Motion Tasks" werden quasiparallel abgearbeitet. Generell enthalten alle Anwenderebenen eine oder mehrere Tasks. Die Tasks nehmen die Anwenderprogramme auf. Die Tasks der "zyklische Anwenderebene" und der "sequentiellen Anwenderebene" werden in einem gemeinsamen Round-Robin-Zyklus abgearbeitet.

Die nächstfolgende Ebene ist die "zeitgesteuerte Anwenderebene". Die Tasks dieser Ebene werden zeitgesteuert aktiviert. Die Zeitsteuerung ist einer Granularität von Millisekunden einstellbar. Auf die "zeitgesteuerte Anwenderebene" folgt die "ereignisgesteuerte Anwenderebene". In dieser Ebene werden nach Erkennen eines User Interrupts so genannte "User Interrupt Tasks" aktiviert. User Interrupt Ereignisse können als logische Verknüpfung von Prozessereignissen und/oder internen Zuständen formuliert werden.

Die nächsthöhere Ebene ist die die "Anwenderebene für System Exceptions". In dieser "Anwenderebene für System Exceptions" werden System Interrupts überwacht, bei deren Eintreffen so genannte "Exceptions", d.h. Ausnahmefallbehandlungen, generiert werden. In der "Anwenderebene für System Exceptions" gibt es z.B. folgende Tasks, die bei Auftreten eines entsprechenden System Interrupts aktiviert werden:
a) "Time Fault Task", die beim Ansprechen von Zeitüberwachungen aktiviert wird,
b) "Peripheral Fault Task", die z.B. bei Prozess- und Diagnosealarmen aktiviert wird, aber auch bei Stationsausfall oder Stationswiederkehr,
c) "System Fault Task", die bei allgemeinen Systemfehlern aktiviert wird,
d) "Program Fault Task", die bei Programmierfehlern (z.B. Division durch Null) aktiviert wird,
e) "Time Fault Background Task", die beim Ansprechen der Zykluszeitüberwachung der Background Task aktiviert wird und
f) "Technological Fault Task", die bei Technologiefehlern aktiviert wird.

Als nächstes folgt die Ebenengruppe "synchron getaktete Ebenen". Diese Ebenengruppe besitzt die höchste Priorität im Ablaufebenenmodell. Die einzelnen Ebenen dieser Ebenengruppe können untereinander weitere Priorisierungen aufweisen. Die Ebenengruppe "synchron getaktete Ebenen" besteht aus mindestens einer Systemebene und mindestens einer Anwenderebene. Die Systemebenen beinhalten die Systemfunktionen wie z.B. Lageregler oder Interpolator. In die Anwenderebenen dieser Ebenengruppe können von einem Anwender flexibel Anwenderprogramme (AP1 - AP4; FIG 6) zugeladen werden.

Für die Taktung der "synchron getakteten Ebenen" gibt es eine Reihe unterschiedlicher Taktgenerierungsmöglichkeiten. Der Grundtakt kann z.B. aus einem internen Timer (T1; FIG 7) kommen oder aus einem internen Takt (T3; FIG 7) eines Kommunikationsmediums (z.B. Profibus) oder aber der Takt kann auch aus einem Prozessereignis des technologischen Prozesses abgeleitet werden. Ein solches Prozessereignis kann z.B. die Taktrate (TG; FIG 7) eines Vorgangs an einer Produktionsmaschine oder Verpackungsmaschine sein. Anwenderebenen der Ebenengruppe "synchron getaktete Ebenen" können dabei basierend auf dem Grundtakt getaktet werden, sie können aber auch synchron zu einer der Systemebenen der Ebenengruppe "synchron getaktete Ebenen" laufen. Die Anwendertasks dieser zu einer Systemebene synchronen Anwenderebene haben somit eine synchrone, d.h. deterministische Beziehung zu einer vom Anwender flexibel festlegbaren Systemebene. Das hat den Vorteil, dass deterministische Reaktionen auf Systemtasks (Systemtasks laufen in den Systemebenen), die der Anwender in seinen Anwendertasks programmiert hat, die in den Anwenderebenen der Ebenengruppe "synchron getaktete Ebenen" laufen, vom System garantiert werden. Das heißt z.B., dass das System garantiert, dass diese "synchrone Anwenderebene" entsprechend beispielhaft vor dem Interpolator aktiviert wird oder aber auch vor einer beliebigen anderen Systemfunktion.

Die "zeitgesteuerte Anwenderebene", die "ereignisgesteuerte Anwenderebene", die "sequentielle Anwenderebene", die "zyklische Anwenderebene" sowie die "Anwenderebene für System Exceptions" sind optional.

Die Task der "zyklischen Anwenderebene" (Background Task) ist zykluszeitüberwacht. Die "Motion Tasks" dagegen sind nicht zykluszeitüberwacht und dienen im wesentlichen zur Beschreibung sequentieller Abläufe. Das heißt, das vorliegende Ablaufebenenmodell unterstützt einen Anwender sowohl bei der Programmierung von sequentiellen Abläufen als auch bei der Ereignisprogrammierung. Es können somit synchrone Ereignisse als auch asynchrone Ereignisse durch die Programmierung erfasst werden. In die Anwenderebenen sind die vom Anwender erstellten Anwenderprogramme (AP1 - AP4; FIG 6) zuladbar. Die Anwenderprogramme AP1 bis AP4 werden üblicherweise mit Hilfe einer Programmierumgebung des Engineering-Systems (ES; FIG 4) erstellt.

Die Darstellung gemäß FIG 6 zeigt ein Ausführungsbeispiel für das Zuladen von Anwenderprogramm in die Anwenderebenen. FIG 6 zeigt exemplarisch eine Ausprägung von Anwenderebenen des Ablaufebenenmodells. Durch die drei Punkte am unteren Rand der Zeichnung ist dargestellt, dass auch noch weitere Anwenderebenen, aber auch Systemebenen vorhanden sein können. Die Priorisierung der Ebenen wird wie im Vorangegangenen durch einen Pfeil in Richtung zur höchsten Priorität angedeutet. Den Anwenderebenen werden die Anwenderprogramme AP1 bis AP4, am rechten Bildrand durch kleine Rechtecke angedeutet, zugeordnet. Die Zuordnung wird dargestellt durch Zuordnungspfeile ZP1 bis ZP4. In den Anwenderebenen befinden sich Tasks, die die zugeladenen Anwenderprogramme AP1 bis AP4 aufnehmen. Diese Tasks werden dann nach einer gewissen Strategie (z.B. sequentiell) durchlaufen bzw. abgearbeitet.
Darstellung gemäß FIG 7 zeigt in einer Schemadarstellung Möglichkeiten, wie der Grundtakt für die industrielle Steuerung gewonnen wird. FIG 7 zeigt exemplarisch eine Kommunikationstopologie, in die die Steuerung S integriert ist. Die Steuerung S ist durch ein Rechteck dargestellt. Durch eine Anschlussleitung A2 ist die Steuerung S mit dem Bus B1 verbunden, an dem über eine Anschlussleitung A1 das externe Gerät EG hängt. Über den Bus B2 erfolgt die Verbindung zum technischen Prozess P2. Der technische Prozess P2 ist am unteren Bildrand durch ein Rechteck dargestellt. Über die Anschlussleitung A3 ist die Steuerung S mit dem Bus B2 verbunden, der wiederum über die Anschlussleitung A4 die Verbindung zum technischen Prozess P2 herstellt.

Die Generierung für den Grundtakt der Steuerung S kann aus unterschiedlichen Taktquellen erfolgen. So z.B. aus einer internen Taktquelle, dargestellt durch den internen Timer T2 der Steuerung S oder auch durch eine externe Taktquelle wie z.B. den Timer T1, der zum externen Gerät EG gehört. Als externe Taktquelle kann aber auch der Grundtakt eines Kommunikationsmediums dienen. Wenn der Bus B2 z.B. durch einen äquidistanten Profibus realisiert wird, dann kann der Takt für die Steuerung aus dem Grundtakt dieses Busses gewonnen werden. In FIG 7 ist dies dargestellt dadurch, dass der Timer T3 direkt an der Anschlussleitung A3 positioniert ist, und diese Anschlussleitung A3 stellt die Verbindung zum Bus B2 her. Die Steuerung hängt somit als Slave am Bus und kann direkt den Bustakt verwenden. Es gibt mehrere Varianten, wie der Takt für die Steuerung aus dem Grundtakt eines Kommunikationsmediums (z.B. eines Busses) gewonnen werden kann:
Zum einen kann die Steuerung S Slave am Bus sein, die Taktinformation kommt dann von extern über den Bus. Zum anderen kann die Steuerung S Master am Bus sein. Die Taktquelle liegt in diesem Fall in der Steuerung S. Für diesen Fall existieren zwei Ausprägungen. Die Taktquelle kann in einer Masterbusanschaltung liegen oder die Taktquelle ist in der Steuerung S, hierbei erfolgt die Einspeisung des Taktes in die Masterbusanschaltung.

Weiterhin kann als externe Taktquelle ein Taktgeber TG dienen, der im technischen Prozess P2 integriert ist. Ein Taktgeber TG in einem technischen Prozess kann z.B. der Arbeitstakt einer Produktionsmaschine oder Verpackungsmaschine sein. In der Darstellung gemäß FIG 7 sind als Kommunikationsmedien beispielhaft Busverbindungen dargestellt. Es können aber als Kommunikationsmedien aber auch Ring-, Stern- oder andere Verbindungsarten gewählt werden, auch wireless-Verbindungen. Aus diesen Verbindungssystemen kann dann der oben genannte Grundtakt abgeleitet werden.

## Patentansprüche

1. Industrielle Steuerung (S) zur Integration mehrerer Automatisierungskomponenten (SPS,MC,RC,CNC) in ein einheitliches Ablaufebenenmodell eines jeweiligen Runtime-Systems (RTS) der industriellen Steuerung (S), wobei die industrielle Steuerung (S) ein einheitlich konfigurierbares Ablaufebenenmodell für eine Steuerungstask der industriellen Steuerung aufweist und das Ablaufebenenmodell flexibel erstellbar ist, wobei ein Grundtakt des Ablaufebenenmodells:
• aus einem internen Timer (T2) oder
• aus einem internen Takt (T3) eines Kommunikationsmediums (B1, B2) oder
• aus einem externen Gerät (EG) oder
• von einer Größe (TG), die zum technologischen Prozess (P1, P2) gehört
ableitbar ist.

2. Industrielle Steuerung (S) nach Anspruch 1,
**dadurch gekennzeichnet,**
**dass** das Ablaufebenenmodell aus einer Anordnung von System- und/oder Anwenderebenen besteht, wobei die System- und/oder Anwenderebenen priorisierbar sind.

3. Industrielle Steuerung (S) nach einem der vorstehenden Ansprüche, **dadurch gekennzeichnet,**
**dass** in die Anwenderebenen Anwenderprogramme (AP1 - AP4) ladbar sind.

4. Industrielle Steuerung (S) nach Anspruch 3,
**dadurch gekennzeichnet,**
**dass** aus den Anwenderprogrammen (AP1 - AP4) ein programmierter Zugang zur Gesamtfunktionalität der Steuerung (S) möglich ist.

5. Verfahren zur Integration von mehreren Automatisierungskomponenten (SPS,MC,RC,CNC) in ein einheitliches Ablaufebenenmodell eines jeweiligen Runtime-Systems (RTS) einer industriellen Steuerung (S),
**dadurch gekennzeichnet,**
**dass** bei der industriellen Steuerung (S), welche ein einheitlich konfigurierbares Ablaufebenenmodell für eine Steuerungstask der industriellen Steuerung aufweist, ein Ablaufebenenmodell flexibel erstellt wird, wobei ein Grundtakt des Ablaufebenenmodells:
• aus einem internen Timer (T2) oder
• aus einem internen Takt (T3) eines Kommunikationsmediums (B1, B2) oder
• aus einem externen Gerät (EG) oder
• von einer Größe (TG), die zum technologischen Prozess (P1, P2) gehört
abgeleitet wird.

6. Verfahren nach Anspruch 5,
**dadurch gekennzeichnet,**
**dass** das Ablaufebenenmodell aus einer Anordnung von System- und/oder Anwenderebenen besteht, wobei die System- und/oder Anwenderebenen priorisiert werden.

7. Verfahren nach Anspruch 5 oder Anspruch 6,
**dadurch gekennzeichnet, dass** als externe Taktquelle ein Taktgeber dient, der in einem technischen Prozess (P1,P2) integriert ist.

8. Verfahren nach einem der Ansprüche 5 bis 7,
**dadurch gekennzeichnet, dass** der Taktgeber in einem technischen Prozess (P1,P2) ein Arbeitstakt einer Produktionsmaschine oder einer Verpackungsmaschine ist.

9. Verfahren nach einem der Ansprüche 5 bis 8
**dadurch gekennzeichnet, dass** aus den Anwenderprogrammen (AP1 - AP4) ein programmierter Zugang zur Gesamtfunktionalität der Steuerung möglich ist.

## Claims

1. Industrial controller (S) for the integration of a plurality of automation components (SPS, MC, RC, CNC) in a uniform running level model of a respective runtime system (RTS) of the industrial controller (S), whereby the industrial controller (S) comprises a uniform configurable running level model for a control task of the industrial controller and the running level model can be created in a flexible manner, whereby a basic clock of the running level model is derived:
• from an internal timer (T2) or
• from an internal clock (T3) of a communication medium (B1, B2) or
• from an external device (EG) or
• from a variable (TG) which belongs to the technological process (P1, P2).

2. Industrial controller (S) according to Claim 1,
**characterised in that** the running level model consists of an arrangement of system and/or user levels, whereby the system and/or user levels can be prioritised.

3. Industrial controller (S) according to one of the preceding claims, **characterised in that** user programs (AP1 - AP4) can be loaded into the user levels.

4. Industrial controller (S) according to Claim 3,
**characterised in that** a programmed access to the overall functionality of the controller (S) is possible from the user programs (API - AP4).

5. Method for the integration of a plurality of automation components (SPS, MC, RC, CNC) in a uniform running level model of a respective runtime system (RTS) of the industrial controller (S),
**characterised in that**
with regard to the industrial controller (S) which comprises a uniform configurable running level model for a control task of the industrial controller a running level model is created in a flexible manner, whereby a basic clock of the running level model is derived:
• from an internal timer (T2) or
• from an internal clock (T3) of a communication medium (B1, B2) or
• from an external device (EG) or
• from a variable (TG) which belongs to the technological process (P1, P2).

6. Method according to Claim 5,
**characterised in that** the running level model consists of an arrangement of system and/or user levels, whereby the system and/or user levels are prioritised.

7. Method according to Claim 5 or Claim 6,
**characterised in that** a clock generator which is integrated in a technical process (P1, P2) serves as an external clock source.

8. Method according to one of Claims 5 to 7,
**characterised in that** the clock generator in a technical process (P1, P2) is an operating cycle of a production machine or packaging machine.

9. Method according to one of Claims 5 to 8
**characterised in that** a programmed access to the overall functionality of the controller is possible from the user programs (API - AP4).

## Revendications

1. Commande industrielle (S) pour l'intégration de plusieurs composants d'automatisation (SPS, MC, RC, CNC) dans un modèle de niveaux d'exécution uniforme d'un système d'exécution ou runtime respectif (RTS) de la commande industrielle (S), la commande industrielle (S) comportant un modèle de niveaux d'exécution configurable de manière uniforme pour une tâche de commande de la commande industrielle et le modèle de niveaux d'exécution pouvant être créé de manière flexible, une horloge fondamentale du modèle de niveaux d'exécution pouvant être déduite :
• d'un temporisateur interne (T2) ou
• d'une horloge interne (T3) d'un moyen de communication (B1, B2) ou
• d'un appareil externe (EG) ou
• d'une grandeur (TG) appartenant au processus technique (P1, P2).

2. Commande industrielle (S) selon la revendication 1,
**caractérisée par le fait que** le modèle de niveaux d'exécution est constitué d'un agencement de niveaux de système et/ou de niveaux d'application, les niveaux de système et/ou les niveaux d'application pouvant être munis de priorités.

3. Commande industrielle (S) selon l'une des revendications précédentes,
**caractérisée par le fait que** des programmes d'application (AP1 à AP4) peuvent être chargés dans les niveaux d'application.

4. Commande industrielle (S) selon la revendication 3,
**caractérisée par le fait que**, à partir des programmes d'application (AP1 à AP4), un accès programmé à toute la fonctionnalité de la commande (S) est possible.

5. Procédé pour l'intégration de plusieurs composants d'automatisation (SPS, MC, RC, CNC) dans un modèle de niveaux d'exécution uniforme d'un système d'exécution ou runtime respectif (RTS) d'une commande industrielle (S),
**caractérisé par le fait que**, dans la commande industrielle (S) qui comporte un modèle de niveaux d'exécution configurable de manière uniforme pour une tâche de commande de la commande industrielle, un modèle de niveaux d'exécution est créé de manière flexible, une horloge fondamentale du modèle de niveaux d'exécution étant déduite :
• d'un temporisateur interne (T2) ou
• d'une horloge interne (T3) d'un moyen de communication (B1, B2) ou
• d'un appareil externe (EG) ou
• d'une grandeur (TG) appartenant au processus technique (P1, P2).

6. Procédé selon la revendication 5,
**caractérisé par le fait que** le modèle de niveaux d'exécution est constitué d'un agencement de niveaux de système et/ou de niveaux d'application, les niveaux de système et/ou les niveaux d'application étant munis de priorités.

7. Procédé selon la revendication 5 ou la revendication 6,
**caractérisé par le fait qu'**un générateur d'horloge qui est intégré dans un processus technique (P1, P2) sert de source d'horloge externe.

8. Procédé selon l'une des revendications 5 à 7,
**caractérisé par le fait que** le générateur d'horloge dans un processus technique (P1, P2) est une cadence de travail d'une machine de production et/ou d'une machine d'emballage.

9. Procédé selon l'une des revendications 5 à 8,
**caractérisé par le fait que**, à partir des programmes d'application (AP1 à AP4), un accès programmé à toute la fonctionnalité de la commande est possible.
